Europäisches Patentamt

European Patent Office

Office européen des brevets

(19)

(11) Numéro de publication : **0 069 038**
**B1**

(12)

# FASCICULE DE BREVET EUROPÉEN

(45) Date de publication du fascicule du brevet :
28.08.85·

(51) Int. Cl.⁴ : **G 09 F 23/00, B 41 F 17/30**

(21) Numéro de dépôt : **82440003.0**

(22) Date de dépôt : **04.02.82**

(54) **Dispositif pour l'application d'impressions, de dessins, ou autres, tels que, par exemple, un message publicitaire sur un produit alimentaire, en particulier sur un œuf, procédé mis en œuvre par ce dispositif, et produit alimentaire ainsi obtenu.**

(30) Priorité : **17.06.81 FR 8112067**

(43) Date de publication de la demande :
**05.01.83 Bulletin 83/01**

(45) Mention de la délivrance du brevet :
**28.08.85 Bulletin 85/35**

(84) Etats contractants désignés :
**AT BE CH DE GB IT LI LU NL SE**

(56) Documents cités :
**CH-A- 273 320**
**FR-A- 1 500 586**
**FR-A- 2 262 599**
**US-A- 2 169 226**
**US-A- 3 063 365**

(73) Titulaire : **DUR'OEUF, S.A.**
**2, rue de Kingersheim Richwiller**
**F-68120 Pfastatt (FR)**

(72) Inventeur : **Nussbaumer, Willy**
**15, rue de Metz**
**F-68260 Kingersheim (FR)**
Inventeur : **Weber, Eugène**
**Lieudit La Source Colligny**
**F-57530 Courcelles-Chaussy (FR)**
Inventeur : **Muller, Christian**
**64, rue Sellier**
**F-54000 Nancy (FR)**
Inventeur : **Mutel, Patrick**
**4, rue Léon Bonnat**
**F-75016 Paris (FR)**

(74) Mandataire : **Nuss, Pierre**
**10, rue Jacques Kablé**
**F-67000 Strasbourg (FR)**

## Description

La présente invention concerne le domaine de la présentation de produits alimentaires pour la vente, en particulier d'œufs durs, mollets, coques, ou frais, et a pour objet un dispositif pour l'application d'impressions, de dessins, ou autres, tels que, par exemple, un message publicitaire sur un tel produit alimentaire présentant une section circulaire.

L'invention a également pour objet un procédé mis en œuvre par ce dispositif, et le produit alimentaire ainsi obtenu.

Actuellement, la présentation et la vente des produits alimentaires tels que les œufs durs, mollets, coques, ou frais, s'effectuent généralement, soit individuellement, soit plus couramment dans un emballage groupant un certain nombre d'œufs, et ces derniers ne sont pourvus d'aucun habillage publicitaire, ni d'un dispositif permettant leur écalage total ou partiel.

On connaît par le document US-A-3 063 365 un dispositif pour l'application d'impressions sur un produit alimentaire tel que notamment un œuf, essentiellement constitué par un convoyeur sous forme de tapis à rouleaux, et par un ou plusieurs postes d'application de l'impression, dans lequel les rouleaux du convoyeur présentent une génératrice ovoïdale permettant le centrage automatique du produit.

Par les documents FR-A-1 500 586 et CH-A-273 320 on connaît un produit alimentaire, en particulier un œuf, qui est muni d'un message publicitaire sous forme d'une impression directe de la coquille ou sous forme d'un habillage fixé par collage ou simplement enroulé.

Cependant, ces dispositifs d'écalage connus ne permettent pas une mise en place rapide et automatique des œufs, à cadence industrielle, de sorte que leur utilisation à cet effet est incompatible avec un faible prix de revient.

La présente invention a pour but de pallier ces inconvénients.

Elle a, en effet, pour objet un dispositif pour l'application d'impressions, de dessins, ou autres, tels que, par exemple, un message publicitaire sur un produit alimentaire, en particulier sur un œuf, essentiellement constitué par un convoyeur sous forme de tapis à rouleaux, et par un ou plusieurs postes d'application par impression ou collage, dans lequel les rouleaux du convoyeur présentent chacun une génératrice ovoïdale permettant le centrage automatique d'un œuf entre deux rouleaux successifs, caractérisé en ce que chaque poste d'application est muni d'un rouleau entraîné d'application présentant une génératrice ovoïdale et permettant l'application d'un message publicitaire, sous forme d'un habillage quelconque autocollant, collé, ou simplement enroulé, et/ou l'application d'un dispositif d'écalage partiel ou total, en ce qu'en face de chaque rouleau d'application est prévue, sur le convoyeur, une crémaillère engrenant avec un pignon prévu sur les rouleaux du convoyeur lors de son passage devant ledit rouleau d'application, et en ce qu'à chaque poste d'application est adjoint un ensemble de détection et de comptage relié à un dispositif électronique de commande desdits postes d'application.

L'invention a également pour objet un procédé mis en œuvre par ce dispositif, selon lequel les œufs sont transportés individuellement à leur sortie d'une machine de traitement préalable ou directement après ponte et sont centrés sur un convoyeur sous forme d'un tapis à rouleaux présentant une génératrice ovoïdale permettant leur centrage automatique, caractérisé en ce qu'il consiste à amener les œufs sous un ou plusieurs postes d'application d'un message publicitaire et/ou d'un dispositif d'écalage au moyen d'un rouleau entraîné d'application présentant une génératrice ovoïdale, sous lequel les œufs sont mis en rotation pendant l'application, puis à conditionner les œufs ainsi obtenus.

L'invention a également pour objet un produit alimentaire, en particulier un œuf, caractérisé en ce que le dispositif d'écalage est sous forme d'un fil adhésif enroulé en spirale sur l'œuf et recou-vert par un habillage simplement enroulé, ou intégré dans un tel habillage.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue en élévation et en coupe d'un dispositif conforme à l'invention ;

la figure 2 est une vue en plan d'un rouleau du convoyeur, et

la figure 3 est une vue en élévation d'un œuf obtenu par application du procédé conforme à l'invention.

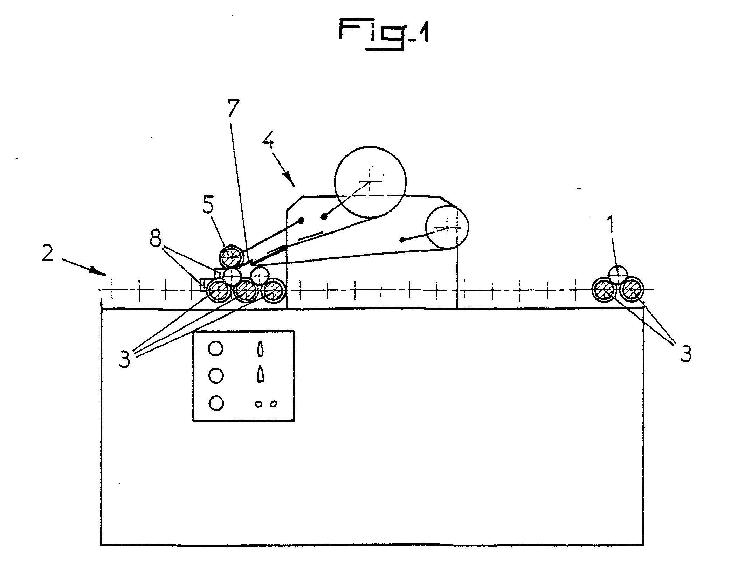

Conformément à l'invention, et comme le montre particulièrement, à titre d'exemple, la figure 1 des dessins annexés, le procédé d'application d'impressions, de dessins, ou autres, tels que, par exemple, un message publicitaire sur un produit alimentaire, en particulier sur un œuf, consiste essentiellement à transporter individuellement les œufs 1 à leur sortie d'une machine de traitement préalable, ou directement après ponte, sur un convoyeur 2 sous forme d'un tapis à rouleaux 3 présentant une génératrice ovoïdale permettant un centrage automatique desdits œufs, et à les amener sous un ou plusieurs postes 4 d'application d'un message publicitaire et/ou d'un dispositif d'écalage au moyen d'un rouleau entraîné d'application 5 présentant une génératrice ovoïdale, puis à conditionner les œufs ainsi obtenus.

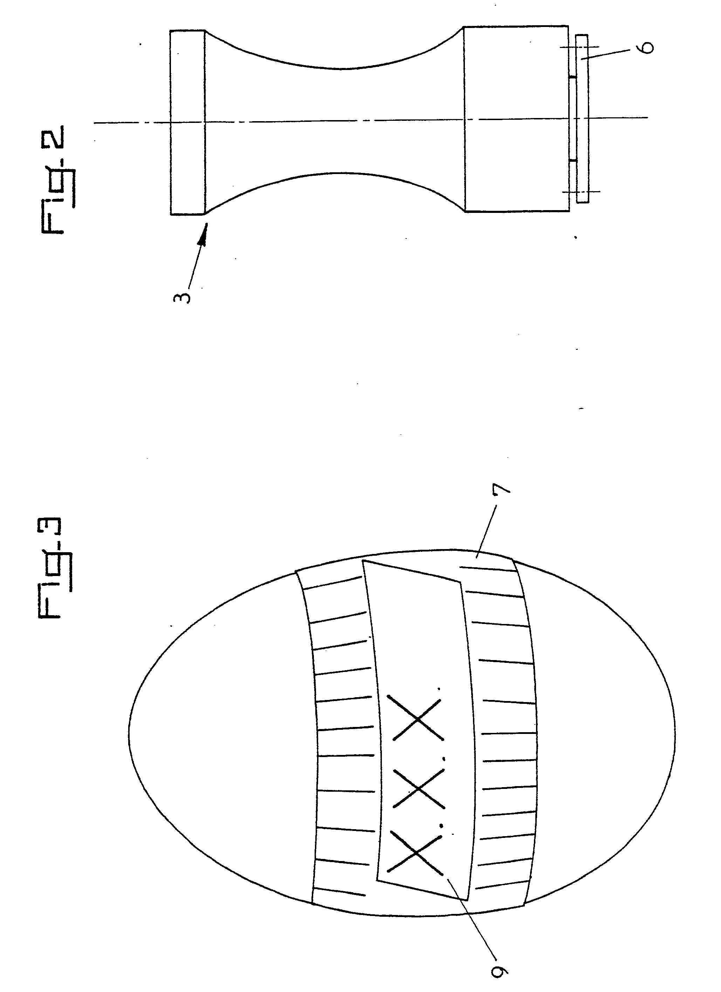

Les rouleaux 3 du convoyeur 2 sont identiques et espacés de manière à permettre le centrage automatique des œufs, dont la surface épouse les contours desdits rouleaux 3. Ces derniers sont, en outre, munis chacun d'un pignon 6 (figure 2), qui coopère avec une ou plusieurs crémaillères, non représentées, prévues sur le convoyeur 2 en face de chaque rouleau entraîné d'application 5, de telle sorte que lesdits rouleaux 3 sont mis en rotation pendant leur passage devant le ou les rouleaux 5 et que l'œuf 1 qu'ils portent tourne également devant ces rouleaux. Ainsi, l'application d'un message publicitaire imprimé, ou sous forme d'une étiquette 7, comme représenté à la figure 1, est favorisée. Dans le cas d'une impression directe des œufs au moyen du rouleau 5, des rouleaux encreurs, non représentés, agissent sur ce dernier.

La commande du mouvement d'application de chaque poste d'application 4 est réalisée par l'intermédiaire d'un boîtier électronique logé dans le dispositif, et relié à un ensemble de détection et de comptage constitué par deux cellules 8 lumineuses, à micro-contact, de proximité, ou autres, adjointes à chaque poste 4, et dont l'une détecte la présence d'un œuf 1, et l'autre procède au comptage des œufs 1, le boîtier électronique donnant, en fonction du nombre de postes d'application 4, une impulsion de commande d'application au poste 4 concerné suivant l'état du comptage et la présence d'œufs. En effet, l'ensemble de détection et de comptage et le boîtier électronique permettent, suivant le nombre de postes d'application, et en fonction d'un programme tenant compte de ce nombre, de réaliser une distribution uniforme des opérations d'application sur chaque poste 4, de sorte que la cadence de travail peut être accrue.

Le message publicitaire 9, appliqué sur chaque œuf 1, peut être imprimé directement, au moyen de produits colorants alimentaires sur les coquilles des œufs au moyen du rouleau 5. Cependant, comme le montre la figure 3, le message 9 peut avantageusement revêtir la forme d'une impression sur une étiquette 7 enroulée autour de l'œuf 1 et fixée sur ce dernier, soit au moyen d'un film autocollant, soit par collage, soit simplement par enroulement grâce à sa forme.

L'étiquette 7 peut présenter une forme quelconque, de préférence épousant la forme de l'œuf. Cette étiquette peut également être sous forme d'un dispositif d'écalage à face intérieure adhérant fortement sur la coquille, et permettant, après casse de l'œuf, un écalage total dans le cas d'un œuf dur, ou si elle est placée sur le sommet de l'œuf un écalage partiel dans le cas d'un œuf mollet ou coque. Le dispositif d'écalage pourrait également être sous forme d'un fil adhésif enroulé en spirale sur l'œuf et recouvert par un habillage simplement enroulé, ou intégré dans un tel habillage.

Grâce à l'invention, il est possible de produire en quantité industrielle des œufs formant support publicitaire et pouvant être munis, le cas échéant, d'un dispositif d'écalage formant un support publicitaire, rapporté ou intégré dans un tel support.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

## Revendications

1. Dispositif pour l'application d'impressions, de dessins, ou autres, tels que par exemple, un message publicitaire sur un produit alimentaire, en particulier sur un œuf, essentiellement constitué par un convoyeur (2) sous forme de tapis à rouleaux (3), et par un ou plusieurs postes (4) d'application par impression ou par collage, dans lequel les rouleaux (3) du convoyeur (2) présentent chacun une génératrice ovoïdale permettant le centrage automatique d'un œuf (1) entre deux rouleaux (3) successifs, caractérisé en ce que chaque poste d'application (4) est muni d'un rouleau entraîné d'application (5) présentant une génératrice ovoïdale et permettant l'application d'un message publicitaire, sous forme d'un habillage quelconque autocollant, collé, ou simplement enroulé, et/ou l'application d'un dispositif d'écalage partiel ou total, en ce qu'en face de chaque rouleau d'application (5) est prévue, sur le convoyeur, une crémaillère engrenant avec un pignon (6) prévu sur les rouleaux (3) du convoyeur (2) lors de son passage devant ledit rouleau d'application (5), et en ce qu'à chaque poste d'application (4) est adjoint un ensemble de détection et de comptage (8) relié à un dispositif électronique de commande desdits postes d'application.

2. Dispositif, suivant la revendication 1, caractérisé en ce que la commande du mouvement d'application de chaque poste d'application (4) est réalisée par l'intermédiaire d'un boîtier électronique logé dans le dispositif, et relié à l'ensemble de détection et de comptage constitué par deux cellules (8) lumineuses, à micro-contact, de proximité, ou autres, adjointes à chaque poste (4) et dont l'une détecte la présence d'un œuf (1), et l'autre procède au comptage des œufs (1), le boîtier électronique donnant, en fonction du nombre de postes d'application (4), une impulsion de commande d'application au poste (4) concerné suivant l'état du comptage et la présence d'œufs.

3. Procédé mis en œuvre par le dispositif suivant la revendication 1, selon lequel des œufs (1) sont transportés individuellement à leur sortie d'une machine de traitement préalable ou directement après ponte et sont centrés sur le convoyeur (2) sous forme d'un tapis à rouleaux (3) présentant une génératrice ovoïdale permettant leur centrage automatique, caractérisé en ce qu'il consiste à amener les œufs sous un ou plusieurs postes (4) d'application d'un message publicitaire et/ou d'un dispositif d'écalage au moyen d'un rouleau entraîné d'application (5) présentant une génératrice ovoïdale, sous lequel les œufs sont mis en rotation pendant l'application, puis à conditionner les œufs ainsi obtenus.

4. Produit alimentaire, en particulier œuf, muni d'un dispositif d'écalage, caractérisé en ce que le dispositif d'écalage est sous forme d'un fil adhésif enroulé en spirale sur l'œuf et recouvert par un habillage simplement enroulé, ou intégré dans un tel habillage.

## Claims

1. Apparatus for applying impressions, designs, or the like, such as, for example, a publicity message to a food product, particularly an egg, essentially constituted by a conveyor (2) in the form of a roller conveyor belt (3), and by one or more applicator stations (4) by printing or by adhesion, in which the rollers (3) of conveyor (2) have in each case an egg-shaped generatrix permitting the automatic centering of an egg (1) between two successive rollers (3), characterized in that each applicator station (4) is provided with a driven applicator roller (5) having an egg-shaped generatrix, and making it possible to apply a publicity message, in the form of a random self-adhesive covering, which is stuck on or simply wound on and/or the application of a partial or total shelling device, in that facing each applicator roller (5) is provided, on the conveyor, a rack meshing with a pinion (6) provided on rollers (3) of the conveyor (2) during its passage in front of the said applicator roller (5) and in that with each applicator station (4) is combined a detection and counting means (8) connected to an electronic control device for said applicator stations.

2. Apparatus according to claim 1, characterized in that the control of the application movement of each applicator station (4) is brought about by means of an electronic box located in the apparatus and connected to the detection and counting means constituted by two proximity, microcontact light cells (8) or the like, combined with each station (4) and whereof one detects the presence of an egg (1) and the other counts the eggs (1), said electronic box giving, as a function of the number of applicator stations (4), an application control pulse to the station (4) in question in accordance with the state of the count and the presence of eggs.

3. Process utilizing the apparatus according to claim 1, in which eggs (1) are individually conveyed on leaving a prior processing machine or directly after laying, and are centred on the conveyor (2) in the form of a roller conveyor belt (3) having an egg-shaped generatrix permitting their automatic centering, characterized in that it comprises bringing the eggs beneath one or more stations (4) for applying a publicity message, and/or a shelling device by means of a driven applicator roller (5) having an egg-shaped generatrix, under which the eggs are rotated during application, followed by the conditioning of the thus obtained eggs.

4. Food product, particularly an egg, provided with a shelling device, characterized in that the shelling device is in the form of an adhesive wire, spirally wound on to the egg and covered by a rolled covering or integrated into such a covering.

## Patentansprüche

1. Vorrichtung zum Bedrucken, Bezeichnen, oder ähnlichem, zum Beispiel mit einer Werbemitteilung auf einem Nahrungsmittelprodukt, insbesondere eines Eies, im wesentlichen bestehend aus einer Transporteinrichtung (2) in Form einer Bahn mit Rollen (3) und aus einer oder mehreren Stellen (4) zum Aufbringen mittels Druck oder Aufkleben, bei der die Rollen (3) der Transporteinrichtung (2) jeweils eine annähernd eiförmige Mantellinie aufweisen, welche die automatische Zentrierung eines Eies (1) zwischen zwei aufeinanderfolgenden Rollen (3) ermöglicht, dadurch gekennzeichnet, dass jede Aufbringungsstelle (4) mit einer angetriebenen Aufbringungsrolle (5) versehen ist, die eine annähernd eiförmige Mantellinie aufweist und das Aufbringen einer Werbemitteilung in Form irgendeiner selbstklebenden, aufgeklebten oder nur umwickelten Umkleidung ermöglicht, und-/oder das Aufbringen eines teilweisen oder ganzen Schalenelements, dass gegenüber jeder Aufbrigungsrolle (5) auf der Transporteinrichtung eine Zahnstange vorgesehen ist, die in ein auf den Rollen (3) der Transporteinrichtung (2) vorgesehenes Ritzel (6) während ihres Durchlaufs vor der besagten Aufbringungsrolle (5) eingreift, und dass jeder Aufbringungsstelle (4) eine Detektions- und Zähleinheit (8) zugeordnet ist, die an eine elektronische Steuereinrichtung der Besagten Aufbringungsstellen angeschlossen ist.

2. Vorrichtung nach Anspruch 1, dadurch gekennzeichnet, dass die Steuerung der Aufbringunsbewegung jeder Aufbringungsstelle (4) mit Hilfe eines elektronischen Gehäuses durchgeführt wird, das in der Vorrichtung untergebracht und mit der Detektions- und Zähleinheit verbunden ist, die aus zwei in der Nähe voneinander liegenden Lichtzellen (8), mit Mikrokontakt, oder ähnlichem besteht, die jeder Stelle (4) zugeordnet sind und wovon eine das Vorhandensein eines Eies (1) erfasst, und die andere das Zählen der Eier (1) vollzieht, wobei das elektronische Gehäuse, je nach Anzahl der Aufbringungsstellen (4) der entsprechenden Stelle (4) einen Aufbringungssteuerimpuls gemäss dem Zählstand und dem Vorhandensein von Eiern gibt.

3. Verfahren, durchgeführt mittels der Vorrichtung nach Anspruch 1, nach welchem Eier (1) einzeln nach dem Verlassen einer Vorbehandlungsmaschine, oder direkt nach der Eiablage weiterbefördert und auf der Transporteinrichtung (2) in Form einer Bahn mit Rollen (3) zentriert werden, welche eine annähernd eiförmige Mantellinie aufweisen, die deren automatischen Zentrieren ermöglicht, dadurch gekennzeichnet, dass es darin besteht, die Eier unter einer oder mehrere Stellen (4) zum Aufbringen einer Werbemitteilung und/oder eines Schalenelements mit Hilfe einer angetriebenen Aufbringungsrolle (5) zu führen, die eine annähernd eiförmige Mantellinie aufweist, unter welcher die Eier während der Aufbringung in Rotation versetzt werden, danach die so erzielten Eier weiterzubehandeln.

4. Nahrungsmittelprodukt, insbesondere Ei, versehen mit einem Schalenelement, dadurch gekennzeichnet, dass das Schalenelement als Klebfaden ausgeführt ist, der spiralförmig um das Ei gelegt wird und mit einer nur herumgelegten Umkleidung bedeckt ist oder in einer solchen Umkleidung integriert ist.

# Fig-1

Fig. 3

Fig. 2

X.X.X.

9

7

3

6

0 069 038